# EUROPÄISCHE PATENTSCHRIFT

(11) **EP 1 261 766 B1**
(45) Veröffentlichungstag und Bekanntmachung des Hinweises auf die Patenterteilung: **11.04.2007**
(21) Anmeldenummer: 01955102.7
(22) Anmeldetag: 24.01.2001
(51) Int. Cl.: D04H 3/10, B60R 13/08

(54) **SCHALLABSORPTIONSMATERIAL**
SOUND ABSORBING MATERIAL
MATERIAU D'ISOLATION PHONIQUE

(30) Priorität: 28.02.2000 DE 10009281
(43) Veröffentlichungstag der Anmeldung: 04.12.2002
(73) Patentinhaber: Carl Freudenberg KG, 69469 Weinheim (DE)
(72) Erfinder: EMIRZE, Ararad, 67659 Kaiserslautern (DE); GROTEN, Robert, F-68280 Sundhoffen (FR); SCHUSTER, Matthias, 69518 Abtsteinach (DE)
(86) Internationale Anmeldenummer: PCT/EP2001/000727
(87) Internationale Veröffentlichungsnummer: WO 2001/064991

(56) Entgegenhaltungen:
- EP-A- 0 624 676
- EP-A- 0 887 483
- US-A- 4 476 186
- US-A- 5 355 565
- US-A- 5 899 785
- US-A- 5 970 583

## Beschreibung

Die Erfindung betrifft ein Schallabsorptionsmaterial, bestehend aus einem Mikrofilament-Vliesstoff mit Flächengewichten von 40 bis 300 g/m².

Aus den Dokumenten EP 0 909 680 und US 4,851,283 sind Verkleidungsteile für Automobilinnenräume wie Autohimmel bekannt, die schallabsorbierende Eigenschaften besitzen. Sie bestehen aus einer Stapelfaservliesschicht, in der vorzugsweise Polyesterfasern mit Hilfe von Bindefasern verfestigt sind, und sind mindestens mit einer Schaumstoffschicht beschichtet.

Weiterhin sind aus den Dokumenten DE 197 26 965 und DE 197 08 188 Dämm- und Schallschutzmaterialien bekannt, die aus Stapelfaser-Vliesstoffen insbesondere aus Polyesterfasern bestehen und durch mechanische sowie thermische Verfahren verfestigt sind.

Im Zuge der steigenden Anforderungen der Automobilindustrie werden neue Forderungen an die Zulieferer herangetragen. So sollen die im Innenbereich des Automobils eingesetzten Auskleidungsteile eine attraktive Optik und Haptik des Dekors aufweisen. Die Teile sollen recyclingfähig sein, eine sehr hohe Farb- und Lichtechtheit insbesondere Heißlichtechtheit, eine geringe Verschmutzungsneigung, eine hohe Abriebbeständigkeit, Feuchtigkeitsbeständigkeit, Flammbeständigkeit; Reinigbarkeit und sehr gute Tiefziehfähigkeit besitzen und darüber hinaus den wachsenden Anforderungen an den Schallschutz mit dem Ziel der Komfortsteigerung für die Automobil-Insassen Rechnung tragen.

Die Erfindung hat sich die Aufgabe gestellt, ein Schallabsorptionsmaterial sowie ein Verfahren zu seiner Herstellung anzugeben, das den angegebenen Forderungen Rechnung trägt.

Erfindungsgemäß wird die Aufgabe durch ein Schallabsorptionsmaterial gelöst, welches aus einem Mikrofilament-Vliesstoff mit Flächengewichten von 40 bis 300 g/m² besteht, wobei der Vliesstoff aus schmelzgesponnenen, verstreckten und unmittelbar zu einem Vlies abgelegten Mehrkomponenten-Endlosfilamenten mit einem Titer von 1,5 bis 5 dtex besteht und die Mehrkomponenten-Endlosfilamente gegebenenfalls nach einer Vorverfestigung zumindest zu 80 % zu Mikro-Endlosfilamenten mit einem Titer von 0,1 bis 1,2 dtex gesplittet und verfestigt sind Das Schallabsorptionsmaterial weist eine hohe spezifische Faseroberfläche bei vergleichsweise niedrigen Flächengewicht sowie eine hohe Opazität auf. Die Feinheit der Filamente gestattet eine gute Bedruckbarkeit und Prägbarkeit und damit Dekorgestaltung des Materials.

Vorzugsweise ist das Schallabsorptionsmaterial eines, bei dem der Vliesstoff aus schmelzgesponnenen, aerodynamisch verstreckten und unmittelbar zu einem Vlies abgelegten Mehrkomponenten-Endlosfilamenten mit einem Titer von 1,5 bis 3 dtex besteht und die Mehrkomponenten-Endlosfilamente zumindest zu 80 % zu Mikro-Endlosfilamenten mit einem Titer von 0,1 bis 0,3 dtex gesplittet und verfestigt sind. Das Schallabsorptionsmaterial weist eine isotrope Filamentverteilung im Vlies auf, wodurch die Weiterverarbeitung relativ unabhängig von der Maschinenlaufrichtung und damit sehr günstig für die Materialausnutzung ist.

Vorzugsweise ist das Schallabsorptionsmaterial eines, bei dem das Mehrkomponenten-Endlosfilament ein Bikomponenten-Endlosfilament aus zwei inkompatiblen Polymeren, insbesondere einem Polyester und einem Polyamid, besteht. Ein solches Bikomponenten-Endlosfilament weist eine gute Spaltbarkeit in Mikro-Endlosfilamenten auf und bewirkt ein günstiges Verhältnis von Festigkeit zu Flächengewicht. Gleichzeitig ist das erfindungsgemäße Schallabsorptionsmaterial aufgrund der verwendeten Polymere und deren Filamentstruktur gut reinig- und abwischbar und weist eine hohe Abriebbeständigkeit auf, d.h., es ist pflegeleicht.

Vorzugsweise ist das Schallabsorptionsmaterial eines, bei dem die Mehrkomponenten-Endiosfilamente einen Querschnitt mit orangenartiger oder auch "Pie" genannten Multisegment-Struktur aufweisen, wobei die Segmente alternierend jeweils eines der beiden inkompatiblen Polymeren enthalten. Neben dieser orangenartigen Multisegment-Struktur der Mehrkomponenten-Endlosfilamente ist auch eine "side-by-side" (s/s) Segment-Anordnung der inkompatiblen Polymeren im Mehrkomponenten-Endlosfilament möglich, die vorzugsweise zur Erzeugung gekräuselter Filamente genutzt wird Solche Segment-Anordnungen der inkompatiblen Polymeren im Mehrkomponenten-Endlosfilament haben sich als sehr gut spaltbar erwiesen. Das Schallabsorptionsmaterial besitzt eine gute Tiefziehfähigkeit bzw. Verformbarkeit, die sich in den mittleren Festigkeitswerten bei einem hohen Dehnungsvermögen und vergleichsweise niedrigen Modulwerten äußern.

Vorzugsweise ist das Schallabsorptionsmaterial weiterhin eines, bei dem mindestens eines der das Mehrkomponenten-Endiosfilament bildenden inkompatiblen Polymeren ein Additiv, wie Farbpigmente, permanent wirkende Antistatika, Flammschutzmittel und/oder die hydrophoben Eigenschaften beeinflussende Zusätze in Mengen bis zu 10 Gewichtsprozent, enthält. Durch die Zusätze können statische Aufladungen vermindert bzw. vermieden und die Heißlichtechtheiten verbessert werden. Mit nachgefärbten Produkten sind Heißlichechtheiten von ≥ 6 bestimmt nach der DIN EN 20105-A02 erzielt worden.

Das erfindungsgemäße Verfahren zur Herstellung eines Schallabsorptionsmaterials besteht darin, daß Mehrkomponenten-Endlosfilamente aus der Schmelze ersponnen, verstreckt und unmittelbar zu einem Vlies abgelegt werden, eine Vorverfestigung erfolgt und der Vliesstoff durch Hochdruck-Fluidstrahlen verfestigt wie gleichzeitig in Mikro-Endlosfilamente mit einem Titer von 0,1 bis 1,2 dtex gesplittet wird. Das so erhaltene Schallabsorptionsmaterial ist sehr gleichmäßig hinsichtlich seiner Dicke, es weist eine isotrope Fadenverteilung auf und besitzt keine Neigung zum Delaminieren.

Vorteilhafterweise wird das Verfahren zur Herstellung des Schallabsorptionsmaterials in der Weise durchgeführt, daß die Verfestigung und Splittung der Mehrkomponenten-Endlostilamente dadurch erfolgt, daß der gegebenenfalls vorverfestigte Vliesstoff mindestens einmal auf jeder Seiten mit Hochdruck-Wasserstrahlen beaufschlagt wird. Das Schallabsorptionsmaterial weist dadurch eine gute Oberfläche und einen Splittungsgrad der Mehrkomponenten-Endlosfilamente > 80 % auf.

Vorteilhafterweise wird das erfindungsgemäße Schallabsorptionsmaterial zur Erhöhung seiner Abriebbeständigkeit noch einer Punktkalandierung unterzogen. Dazu wird der gesplittete und verfestigte Vliesstoff durch beheizte Walzen geführt, von denen mindestens eine Walze Erhebungen aufweist, die zu einem punktuellen Verschmelzen der Filamente untereinander führen.

Das erfindungsgemäße Schallabsorptionsmaterials ist aufgrund seiner Eigenschaften wie guter Bedruckbarkeit, hoher Abriebbeständigkeit sowie seiner guten Heißfichtechtheit, der Thermoformbarkeit in Tiefziehverfahren und der haptischen Gestaltung zur Herstellung von Autohimmeln, Türverkleidungen, Säulenverkleidungen, Hutablagen und/oder Kofferraumauskleidungen sowie Radkastenauskleidungen geeignet. Dabei kann, wenn auf eine sehr hohe Gewichtseinsparung zu achten ist, auch auf eine zusätzliche Schaumstoffbeschichtung verzichtet werden, ohne große Einbußen an den Schallabsorptionseigenschaften zu erleiden.

Das Schallabsorptionsmaterial ist als Schallabsorptionsschicht im Himmelaufbau, im Aufbau von Säulen-, Tür- und Kofferraumverkleidungen, im Aufbau von Armaturentafeln, im Bereich des Motorraumes und/oder der Bodenauskleidung geeignet, wobei es gegenüber bekannten Materialien gute Schallabsorptionswerte bei geringen Flächengewichten aufweist.

Insbesondere ist das Schallabsorptionsmaterial als Tuftträger für Autoteppiche geeignet, der bei wesentlich geringerem Materialeinsatz mindestens gleich gute Schallabsorptionseigenschaften wie herkömmliche Autoteppiche besitzt, da auf schwere Teppichrückenbeschichtungen verzichtet werden kann.

### Beispiel 1

Aus einem side-by-side (s/s) Polyester-Polyamid 6.6 (PES-PA6.6)-Bikomponenten-Endlosfilament mit einem Titer von 2,3 dtex und einem Gewichtsverhältnis von PES/PA6.6 von 60/40 wird ein Filamentflor mit einem Flächengewicht von 138 g/m² erzeugt und einer Wasserstrahlvernadelung mit Drücken bis 230 bar beidseitig unterzogen. Die Bikomponenten-Endlosfilamente weisen nach der Wasserstrahlvernadelung, die zu einer gleichzeitigen Splittung der Ausgangsfilamente führt, einen Titer < 1,2 dtex und eine Dicke von 0,73 mm auf. Für die Reißfestigkeit in Maschinenlaufrichtung wurden 391 N und in Querrichtung 372 N ermittelt.

### Beispiel 2

Aus einem 16 Segment (Pie) Polyester-Polyamid 6.6 (PES-PA6.6)-Bikomponenten-Endlosfilament mit einem Titer von 2,4 dtex und einem Gewichtsverhältnis von PES/PA6.6 von 55/45 wird ein Filamentflor mit einem Flächengewicht von 115 g/m² erzeugt und einer Wasserstrahlvernadelung mit Drücken bis 230 bar beidseitig unterzogen. Die Bikomponenten-Endfosfilamente weisen nach der Wasserstrahlvernadelung, die zu einer gleichzeitigen Splittung der Ausgangsfilamente führt, einen Titer < 0,15 dtex und nach einem abschließenden Glätten eine Dicke von 0,48 mm auf. Für die Reißfestigkeit in Maschinentaufrichtung wurden 302 N und in Querrichtung 303 N ermittelt.

### Vergleichsbeispiel

Es wurde ein handelsüblicher einlagiger Nadelvliesstoff aus Polyester (Autohimmel-Material), ca. 1,1 mm dick eingesetzt.

### Vergleichsbeispiel 2

Ein Laminat aus einem Gewirk (ca. 0,6 mm dick) und einer Schaumstoffunterlage (ca. 1,6 mm dick), welches typischerweise als Autohimmel-Material eingesetzt wird, wurde getestet.

Vergleichsbeispiel 3

Ein Laminat bestehend aus einem Gewirk (ca. 0,6 mm dick) und einem Polyester-Nadelvlies (ca. 1,9 mm dick), welches typischerweise als Autohimmel-Material eingesetzt wird, wurde getestet.

### Vergleichsbeispiel 4

Ein Laminat bestehend aus einem Gewirk (ca. 0,6 mm dick), einer Schaumstoff-Zwischenlage (ca. 4,4 mm dick) und einer Vliesstoffunterlage (ca. 0,3 mm dick), welches typischerweise als Autohimmel-Material eingesetzt wird, wurde getestet.

Die Ergebnisse der Schallabsorptionseigenschaften (gemessen im Rohr nach DIN 52215) bei verschiedenen Frequenzen sind in Tabelle 1 zusammengefaßt.

**Tabelle 1**

| Bsp.- Nr. | 500 Hz | 625 Hz | 800 Hz | 900 Hz | 1000 HZ | 1120 Hz | 1250 Hz | 1400 Hz | 1600 Hz |
|---|---|---|---|---|---|---|---|---|---|
| 1 | 6% | 12% | 28% | 33% | 39% | 46% | 51% | | 70% |
| 2 | 1 % | 8% | 24% | 34% | 50% | 74% | 91 % | 95% | 95% |
| V1 | 1 % | 5% | 10% | 12% | 14% | 16% | 21 % | | 29% |
| V2 | 2% | 6% | 11 % | 12% | 14% | 16% | 10% | | 27% |
| V3 | 5% | 11% | 20 % | 24% | 28% | 35% | 38 % | | 54% |
| V4 | 5% | 10% | 20% | 25% | 30% | 33% | 34% | 71 % | 76% |

## Patentansprüche

1. Verwendung eines Mikrofilament-Vliesstoffes mit einem Flächengewicht von 40 bis 300 g/m², bestehend aus schmelzgesponnenen, verstreckten und unmittelbar zu einem Vlies abgelegten Mehrkomponenten-Endlosfilamenten mit einem Titer von 1,5 bis 5 dtex, bei dem die Mehrkomponenten-Endlosfilamente gegebenenfalls nach einer Vorverfestigung zumindest zu 80 % zu Mikro-Endlosfilamenten mit einem Titer von 0,1 bis 1,2 dtex gesplittet und verfestigt sind, als Schallabsorptionsschicht im Himmelaufbau, im Aufbau von Säulen-, Tür und Kofferraumverkleidungen, im Aufbau von Armaturentafeln, im Bereich des Motorraumes und/oder der Bodenauskleidung.

2. Verwendung eines Mikrofilament-Vliesstoffes mit einem Flächengewicht von 40 bis 300 g/m², bestehend aus schmelzgesponnenen, verstreckten und unmittelbar zu einem Vlies abgelegten Mehrkomponenten-Endlosfilamenten mit einem Titer von 1,5 bis 5 dtex, bei dem die Mehrkomponenten-Endlosfilamente gegebenenfalls nach einer Vorverfestigung zumindest zu 80 % zu Mikro-Endlosfilamenten mit einem Titer von 0,1 bis 1,2 dtex gesplittet und verfestigt sind, als Tuftträger für Autoteppiche.

## Claims

1. Use of a microfilament nonwoven fabric having a basis weight in the range from 40 to 300 g/m² and consisting of continuous multicomponent filaments having a linear density in the range from 1.5 to 5 dtex which are spun on the melt, stretched and directly laid down to form a web and optionally subjected to a preconsolidating operation before being at least 80% split into continuous microfilaments having a linear density in the range from 0.1 to 1.2 dtex and consolidated, as a sound absorption layer in the construction of roof liners, in the construction of column, door and boot linings, in the construction of dashboards, in the region of the engine compartment and/or floor lining.

2. Use of a microfilament nonwoven fabric having a basis weight in the range from 40 to 300 g/m² and consisting of continuous multicomponent filaments having a linear density in the range from 1.5 to 5 dtex which are spun on the melt, stretched and directly laid down to form a web and optionally subjected to a preconsolidating operation before being at least 80% split into continuous microfilaments having a linear density in the range from 0.1 to 1.2 dtex and consolidated, as a tufting base for automotive carpets.

## Revendications

1. Utilisation d'une étoffe nappée à microfilaments d'un poids par unité de surface de 40 à 300 g/m², constituée de filaments sans fin à plusieurs composants filés à l'état fondu, étirés et immédiatement déposés pour former un non-tissé, d'un titre de 1,5 à 5 dtex, au moins 80 % des filaments sans fin à plusieurs composants étant, éventuellement après une présolidification, fendus en microfilaments sans fin d'un titre de 0,1 à 1,2 dtex et solidifiés, comme couche d'isolation phonique dans la structure de plafond, la structure d'habillage de colonnes, de portes et de coffres de véhicules, dans la construction de tableaux de bord, dans la zone du capot moteur et/ou du revêtement de sol.

2. Utilisation d'une étoffe nappée de microfilaments d'un poids par unité de surface de 40 à 300 g/m², constituée de filaments sans fin à plusieurs composants filés à l'état fondu, étirés et immédiatement déposés pour former un non-tissé, d'un titre de 1,5 à 5 dtex, au moins 80 % des filaments sans fin à plusieurs composants étant, éventuellement après une présolidification, fendus en microfilaments sans fin d'un titre de 0,1 à 1,2 dtex et solidifiés, comme support tufté pour des tapis d'automobiles.
